# NEUE EUROPÄISCHE PATENTSCHRIFT

(11) **EP 2 815 900 B2**
(45) Veröffentlichungstag und Bekanntmachung des Hinweises auf die Entscheidung über den Einspruch: **28.07.2021**
(45) Hinweis auf die Patenterteilung: 27.04.2016
(21) Anmeldenummer: 14176932.3
(22) Anmeldetag: 20.10.2010
(51) Int. Cl.: B60D 1/58, B60D 1/06

(54) **Anhängekupplung**
Trailer coupling
Attelage

(30) Priorität: 29.10.2009 DE 102009046179
(43) Veröffentlichungstag der Anmeldung: 24.12.2014
(62) Teilanmeldung aus: 10188249.6
(73) Patentinhaber: ACPS Automotive GmbH, 71706 Markgröningen (DE)
(72) Erfinder: Wieczorek, Romeo, 73732 Esslingen (DE); Riehle, Jörg, 71679 Asperg (DE)
(74) Vertreter: Hoeger, Stellrecht & Partner Patentanwälte mbB

(56) Entgegenhaltungen:
- EP-A1- 2 233 326
- EP-A2- 1 160 105
- US-A- 6 053 521

## Beschreibung

Die Erfindung betrifft eine Anhängekupplung für Kraftfahrzeuge, umfassend eine fahrzeugfest angeordnete Halteeinheit, einen Kugelhals, welcher in einer Arbeitsstellung im Bereich eines ersten Endes mit einer Halteeinheit verbunden ist, und eine Kupplungskugel, welche an einem zweiten Ende des Kugelhalses angeordnet ist.

Solch eine Anhängekupplung ist beispielsweise in der US 6,053,521 A1 gezeigt.

Erfindungsgemäß ist bei einer Anhängekupplung gemäß Anspruch 1 vorgesehen, dass eine Beschleunigungserfassungseinheit mittels eines Sensors auf den Kugelhals einwirkende fremdausgelöste Beschleunigungen erfasst.

Diese Lösung arbeitet unabhängig von einer definierten Erregung von mechanischen Schwingungen im Kugelhals, sondern erfasst generell im Kugelhals auftretende Beschleunigungen, die von unterschiedlichsten Ursachen herrühren können.

Ein derartige Beschleunigungen auslösender Impuls kann beispielsweise dadurch entstehen, dass die Anhängekupplung mit dem Fahrzeug zusammen in einen Unfall verwickelt ist.

Eine andere Art von Beschleunigungen kann dadurch entstehen, dass das Fahrzeug bewegt wird, obwohl es abgestellt und abgeschlossen ist.

Um die Messwerte erkennen zu können, welche von einer signifikanten fremdausgelösten Beschleunigung stammen, ist vorzugsweise vorgesehen, dass die Beschleunigungserfassungseinheit die Messwerte der fremdausgelösten Impulse mit Referenzwerten vergleicht.

Beispielsweise besteht durch die abgespeicherten Referenzwerte die Möglichkeit, alle irrelevanten Beschleunigungen, die von dem Sensor erfasst werden, zu ignorieren.

Um derartige fremdausgelöste Beschleunigungen später nachvollziehen zu können, ist vorzugsweise vorgesehen, dass ein Abspeichern der durch fremdausgelöste Beschleunigungen erzeugten Messwerte erfolgt.

Ein derartiges Abspeichern der Messwerte kann beispielsweise unmittelbar in der Beschleunigungserfassungseinheit erfolgen.

Es besteht aber auch die Möglichkeit, diese Messwerte in einem zentralen Bordcomputer des Fahrzeugs abzuspeichern, so dass die Beschleunigungserfassungseinheit die Messwerte an den zentralen Bordcomputer liefert, der diese dann entweder zeitkorreliert oder nicht zeitkorreliert abspeichern kann.

Damit besteht beispielsweise die Möglichkeit, später nachzuvollziehen, ob die Anhängekupplung in einen Unfall verwickelt war oder nicht, was hinsichtlich der für die Anhängekupplung zu erbringenden Garantieleistungen relevant ist.

Eine andere vorteilhafte Möglichkeit sieht vor, dass ein Aussenden eines Signals beim Auftreten einer fremdausgelösten Beschleunigung erfolgt.

Ein derartiges Aussenden eines Signals kann beispielsweise das Aussenden eines Signals über ein Mobilfunknetz an ein Mobilfunkgerät sein, so dass der Fahrzeugbesitzer für den Fall, dass sein abgestelltes und abgeschlossenes Fahrzeug in einen Unfall verwickelt wird, über sein Mobilfunkgerät informiert werden kann.

Um die erfindungsgemäße Lösung sowohl zum Erfassen von Belastungen des Kugelhalses einzusetzen oder auch generell zum Erfassen von fremdausgelösten Beschleunigungen einzusetzen, besteht die Möglichkeit, die Auswerteeinheit und die Beschleunigungserfassungseinheit in unterschiedlichen Zeiträumen zu betreiben.

Beispielsweise erfolgt ein Betrieb der Auswerteeinheit nach einem Anhängen eines Anhängers, was beispielsweise dadurch erkannt werden kann, dass eine elektrische Verbindung zwischen dem Bordnetz des Kraftfahrzeugs und dem Versorgungsnetz des Anhängers hergestellt wird. Die Auswerteeinheit kann dabei während eines bestimmten Zeitraums nach einer derartigen Verbindung von Bordnetz und Versorgungsnetz aktiviert werden und - möglichst noch bei stehendem Fahrzeug - die Belastung des Kugelhalses erfassen, so dass es hier sich um eine reine statische Belastung handelt, die von der Auswerteeinheit erfasst und ermittelt wird.

Damit entfallen die Störungen, die durch dynamische Belastungen während des Fahrbetriebs entstehen.

Die erfindungsgemäße Auswerteeinheit kann aber auch während des Fahrbetriebs aktiviert sein, um beispielsweise Belastungen des Kugelhalses während des Fahrbetriebs, insbesondere beim Beschleunigen und Abbremsen des Kraftfahrzeuges, zu erkennen und diese Belastungen zu ermitteln, beispielsweise um einen Verspannbetriebsmodus einer Verspannsteuerung auszulösen.

Die Beschleunigungserfassungseinheit kann einerseits während des Fahrbetriebs des Kraftfahrzeugs aktiviert sein, so dass Beschleunigungen während des Fahrbetriebs und gegebenenfalls auch ein während des Fahrbetriebs auftretender Unfall erfasst werden können.

Die Beschleunigungserfassungseinheit kann aber auch bei stehendem Kraftfahrzeug, insbesondere bei geparktem und abgeschlossenem Fahrzeug, aktiviert sein, um in diesem Zustand des Fahrzeugs auftretende Unfälle oder auch einen Diebstahl erfassen zu können.

Ergänzend besteht bei Anhängekupplungen das Problem, Bedämpfungen und Belastungen der Kupplungskugel und Kugelhalses zu erfassen, um zu erkennen, ob die Kupplungskugel freistehend ist oder ob an dieser ein Objekt angreift.

Diese Aufgabe wird bei der Anhängekupplung gemäß Anspruch 1 erfindungsgemäß dadurch gelöst, dass an dem Kugelhals ein Sensor angeordnet ist, der durch eine Erregung im Kugelhals erzeugte mechanische Schwingungen erfasst und den Schwingungen entsprechende Messwerte erzeugt, und dass eine mit dem Sensor zusammenwirkende Auswerteeinheit vorgesehen ist, welche aus dem Verhalten der mechanischen Schwingungen im Kugelhals die mechanische Bedämpfung der Kupplungskugel in der Arbeitsstellung ermittelt.

Der Vorteil der erfindungsgemäßen Lösung ist darin zu sehen, dass durch das Messen des Verhaltens der mechanischen Schwingungen eine einfache Möglichkeit besteht, das Verhalten des Kugelhalses bei durch eine Erregung erzeugten mechanischen Schwingungen zu analysieren und hieraus Schlüsse darüber zu ziehen, inwieweit der Kugelhals und die Kupplungskugel durch ein angreifendes Objekt belastet sind.

Die Erfindung geht dabei davon aus, dass in einem Kugelhals die durch eine Erregung erzeugten mechanischen Schwingungen im unbelasteten Zustand des Kugelhalses und im belasteten Zustand des Kugelhalses jeweils ein anderes Verhalten aufweisen.

Ein derart anderes Verhalten der mechanischen Schwingungen kann einerseits eine geringere Amplitude bei Belastung sein, im Vergleich zum unbelasteten Zustand und/oder ein verändertes Abklingverhalten im belasteten Zustand relativ zum unbelasteten Zustand und/oder eine andere Frequenz der sich einstellenden Schwingungen im belasteten Zustand relativ zum unbelasteten Zustand.

Diese Effekte können einzeln oder in Kombination dazu ausgenutzt werden, die Belastung der Kupplungskugel und des Kugelhalses dadurch zu erfassen, dass das Verhalten von durch eine Erregung erzeugten mechanischen Schwingungen des Kugelhalses ermittelt wird.

Um in einfacher Weise die Messwerte des Sensors auswerten zu können, ist vorzugsweise vorgesehen, dass die Auswerteeinheit die Messwerte mit abgespeicherten Referenzwerten vergleicht.

Durch einen Vergleich mit einzelnen oder mehreren Referenzwerten besteht die Möglichkeit, einerseits zu erfassen, ob der Kugelhals belastet oder unbelastet ist und im Übrigen zu erfassen, wie stark der Kugelhals belastet ist. Im optimalen Fall lässt sich aus dem Vergleich mit Referenzwerten, die im Rahmen eines Eichvorgangs aufgenommen werden, die Belastung der Kupplungskugel und des Kugelhalses mit ausreichender Genauigkeit bestimmen.

Bei geringeren Anforderungen an das von der Auswerteeinheit ermittelte Ergebnis, kann es aber auch ausreichend sein, festzulegen, ob die Kupplungskugel und der Kugelhals signifikant belastet sind und/oder ob die Belastung innerhalb eines vorgegebenen Bereichs oder innerhalb vorgegebener Bereiche oder außerhalb derselben liegt.

Im einfachsten Fall ist es ausreichend, festzustellen, ob die Belastung der Kupplungskugel und des Kugelhalses eine für die Anhängekupplung definierte Schwelle überschreitet oder nicht.

Die erfindungsgemäße Lösung sieht vor, dass der Sensor ein Beschleunigungssensor ist, mit dem Schwingungen im vorgesehenen Frequenzbereich besonders günstig erfasst werden können.

Die Frequenzen können dabei im hörbaren Bereich liegen. Vorzugsweise liegen die Frequenzen höher als 500Hz, noch besser höher als 1kHz um Störeinflüsse zu reduzieren. Eine obere Grenze des Frequenzbereichs liegt in einem bevorzugten Fall bei 15 kHz.

Der Beschleunigungssensor ist erfindungsgemäß richtungsselektiv.

Die Auswertung der Sensorsignale ist erfindungsgemäß dadurch verbessert, dass der Sensor richtungsselektiv Beschleunigungen erfasst, wobei insbesondere eine erste Richtung in Fahrtrichtung eine zweite Richtung quer, insbesondere im rechten Winkel, zur Fahrtrichtung und eine dritte Richtung quer, insbesondere im rechten Winkel, zur Fahrtrichtung und quer zur zweiten Richtung verläuft.

Hinsichtlich der Erregung des Kugelhalses zur Erzeugung der mechanischen Schwingungen in diesem wurden bislang keine näheren Angaben gemacht.

Beispielsweise könnte vorgesehen sein, die mechanischen Schwingungen des Kugelhalses dann zu analysieren, wenn diese aufgrund externer Ereignisse ausgelöst werden. Dies hätte jedoch den Nachteil, dass damit nicht zu jedem Zeitraum eine Erfassung der Belastung des Kugelhalses möglich wäre.

Aus diesem Grund ist vorzugsweise vorgesehen, dass die Erregung des Kugelhalses durch eine Ansteuerung eines die Erregung erzeugenden Vorgangs seitens einer Erregersteuerungseinheit der Anhängekupplung erfolgt.

Das heißt, dass durch die Erregersteuerungseinheit gezielt die Erregung ausgelöst wird, aufgrund welcher dann die mechanischen Schwingungen entstehen, deren Verhalten ausgewertet werden kann, um die Belastung der Kupplungskugel und des Kugelhalses zu ermitteln.

Die Erregung des Kugelhalses zu mechanischen Schwingungen könnte beispielsweise berührungslos über eine elektrische oder magnetische Kopplung erfolgen.

Besonders günstig ist es jedoch, wenn der Kugelhals eine mechanische Erregung, das heißt über eine mechanische Kopplung, erfährt.

Eine derartige mechanische Erregung kann beispielsweise dadurch erfolgen, dass die Erregersteuerungseinheit mindestens einen auf den Kugelhals einwirkenden Impuls auslöst.

Dabei wird vorzugsweise der Impuls nicht unmittelbar neben dem Sensor ausgelöst, sondern vorzugsweise ist vorgesehen, dass der Impuls auf den Kugelhals im Abstand von dem Sensor einwirkt, so dass sich die mechanischen Schwingungen über einen nennenswerten Bereich, das heißt beispielsweise mindestens ein Fünftel, des Kugelhalses hinweg ausdehnen müssen, bevor sie von dem Sensor erfasst werden.

Der Abstand ist beispielsweise dadurch herstellbar, dass die Erregung im Bereich eines der Enden des Kugelhalses erfolgt und dass der Sensor in einem mittigen Bereich des Kugelhalses angeordnet ist.

Bei einer Ausführung beträgt der Abstand mindestens ein Viertel, noch besser ein Drittel, der Länge des Kugelhalses zwischen dessen Enden.

Eine derartige mechanische Erregung lässt sich beispielsweise dadurch erreichen, dass die Erregersteuerungseinheit einen Vibrationsgenerator ansteuert.

Ergänzend oder alternativ dazu ist es ebenfalls möglich, dass die Erregersteuerungseinheit einen Impulsgenerator ansteuert.

Alternativ oder ergänzend dazu sieht eine weitere Lösung vor, dass die Erregersteuerungseinheit eine Blockiereinrichtung für die Fixierung des Kugelhalses an dem Halteteil im Sinne eines Verspannens derselben ansteuert und dadurch eine mechanische Erregung von mechanischen Schwingungen im Kugelhals erzeugt.

Hinsichtlich der Auswertung der Messwerte des Sensors sind die unterschiedlichsten Möglichkeiten denkbar.

Beispielsweise könnte die Auswertung der Messwerte ständig ohne Korrelation zur Erregung der mechanischen Schwingungen im Kugelhals erfolgen.

Eine besonders vorteilhafte Lösung sieht jedoch vor, dass die Auswerteeinheit die Messwerte in ihrer zeitlichen Relation zur Erregung des Kugelhalses auswertet.

Eine derartige Auswertung in zeitlicher Relation zur Erregung umfasst eine Vielzahl von Möglichkeiten.

Eine Möglichkeit sieht vor, nach einem bestimmten Zeitfenster nach der Erregung die Messwerte zu erfassen und auszuwerten.

Alternativ oder ergänzend ist es denkbar, insbesondere bei einer konstanten Erregung der mechanischen Schwingungen über einen bestimmten Zeitraum die Messwerte des Sensors zeitsynchron zur Erregung, das heißt beispielsweise frequenzsynchron zur Erregung, auszuwerten und beispielsweise aus den Messwerten nur die Anteile zu extrahieren, die dieselbe Frequenz wie die Erregung aufweisen.

Alternativ oder ergänzend hierzu kann ebenfalls vorgesehen sein, die Auswertung der Messwerte in zeitlicher Relation zur Erregung in mehreren, nach der Erregung folgenden Zeitbereichen mit unterschiedlichen Auswertekriterien vorzunehmen.

Eine besonders günstige Lösung sieht dabei vor, dass die Auswerteeinheit die Übertragung der mechanischen Schwingungen im Kugelhals erfasst und auswertet. Das heißt, dass die Auswertung sich darauf bezieht, welche Frequenz-oder Amplitudenwerte eine mechanische Schwingung im Kugelhals nach einer definierten Erregung aufweist.

Eine andere vorteilhafte Lösung sieht vor, dass die Auswerteeinheit ein Abklingen der mechanischen Schwingungen im Kugelhals auswertet, das heißt, dass sich die Auswerteeinheit darauf stützt, wie das Abklingverhalten der mechanischen Schwingungen im Kugelhals ist, um hieraus Schlüsse über die mechanische Belastung des Kugelhalses zu ziehen.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine Rückansicht eines Kraftfahrzeugs mit einer erfindungsgemäßen Anhängekupplung;
- Fig. 2: eine vergrößerte Darstellung der Rückansicht gemäß Fig. 1 bei abgenommener Stoßfängereinheit;
- Fig. 3: eine Darstellung ähnlich Fig. 2 bei abgenommener Stoßfängereinheit und in Ruhestellung stehender Anhängekupplung;
- Fig. 4: eine Ansicht der in Arbeitsstellung stehenden Anhängekupplung in Richtung des Pfeils X in Fig. 2;
- Fig. 5: einen Schnitt durch eine Drehblockiereinrichtung im blockierten Zustand;
- Fig. 6: einen Schnitt längs Linie 6-6 in Fig. 5;
- Fig. 7: einen Schnitt ähnlich Fig. 5 mit einem Antrieb für die Drehblockiereinrichtung und einem Antrieb für ein Schwenken eines Kugelhalses der Anhängekupplung;
- Fig. 8: eine schematische Ansicht einer Steuereinheit für die Anhängekupplung gemäß Fig. 1 bis 7;
- Fig. 9: eine schematische Darstellung von in dem Kugelhals ausgelösten mechanischen Schwingungen;
- Fig. 10: eine Darstellung ähnlich Fig. 4 eines zweiten Ausführungsbeispiels einer erfindungsgemäßen Anhängekupplung;
- Fig. 11: eine schematische Darstellung der Steuerung ähnlich Fig. 8 des zweiten Ausführungsbeispiels der erfindungsgemäßen Anhängekupplung;
- Fig. 12: eine schematische Darstellung der im Kugelhals auftretenden Schwingungen ähnlich Fig. 9 bei dem zweiten Ausführungsbeispiel der erfindungsgemäßen Anhängekupplung;
- Fig. 13: eine Darstellung ähnlich Fig. 4 eines dritten Ausführungsbeispiels einer erfindungsgemäßen Anhängekupplung;
- Fig. 14: eine schematische Darstellung der Steuerung ähnlich Fig. 8 des dritten Ausführungsbeispiels der erfindungsgemäßen Anhängekupplung und
- Fig. 15: eine Darstellung der mechanischen Schwingungen ähnlich Fig. 9 bei dem dritten Ausführungsbeispiel der erfindungsgemäßen Anhängekupplung.

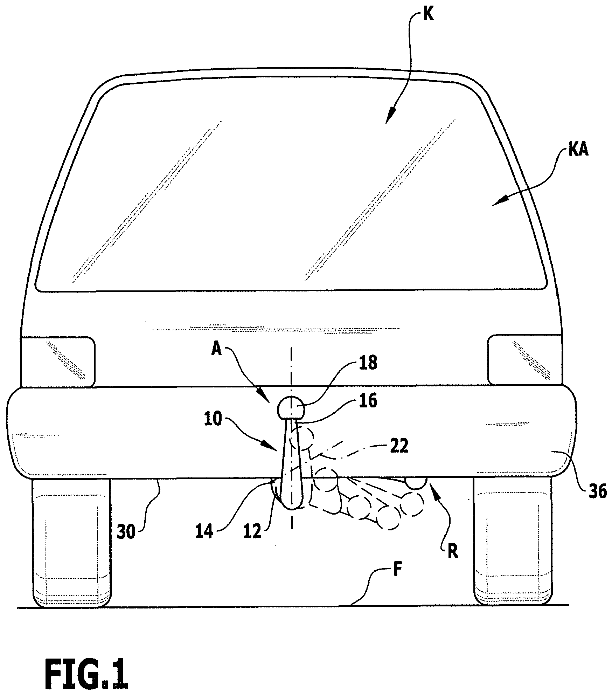

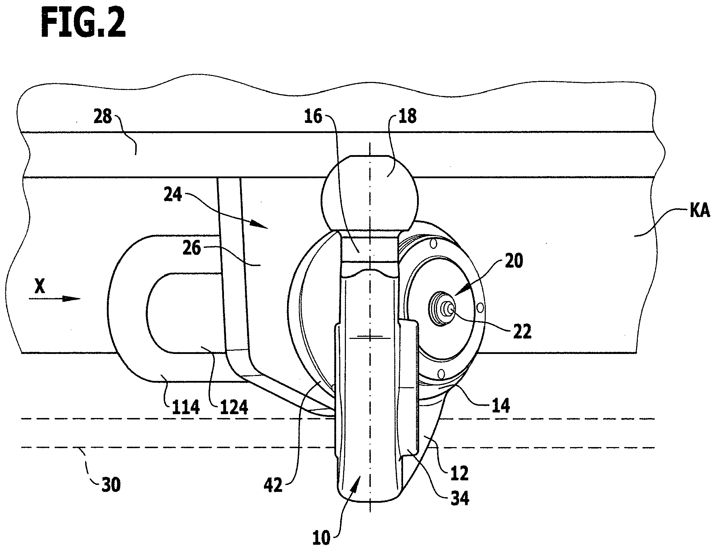

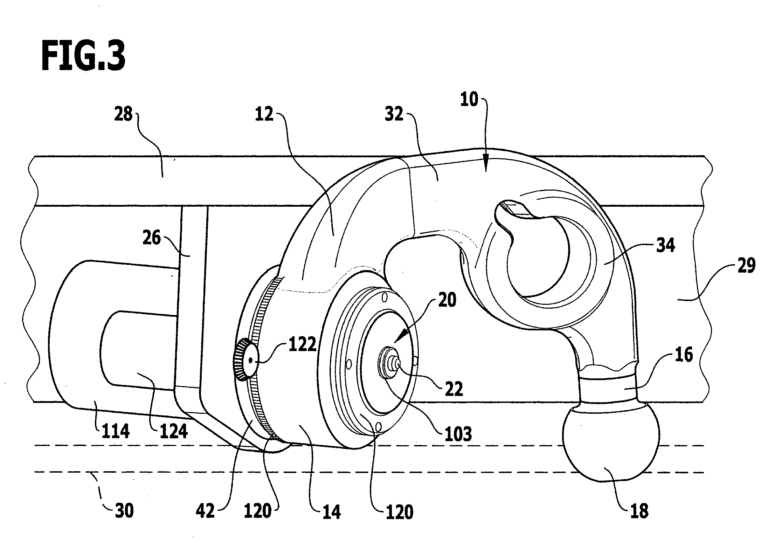

Ein erstes Ausführungsbeispiel einer erfindungsgemäßen Anhängekupplung für ein Kraftfahrzeug K, dargestellt in Fig. 1 und 2 in einer Arbeitsstellung A und in Fig. 3 in einer Ruhestellung R, umfasst einen als Ganzes mit 10 bezeichneten Kugelhals, welcher mit einem ersten Ende 12 an einem Schwenklagerkörper 14 gehalten ist und an einem zweiten Ende 16 eine als Ganzes mit 18 bezeichnete Kupplungskugel trägt, an welcher eine Kupplungskugelaufnahme eines Anhängers fixierbar ist.

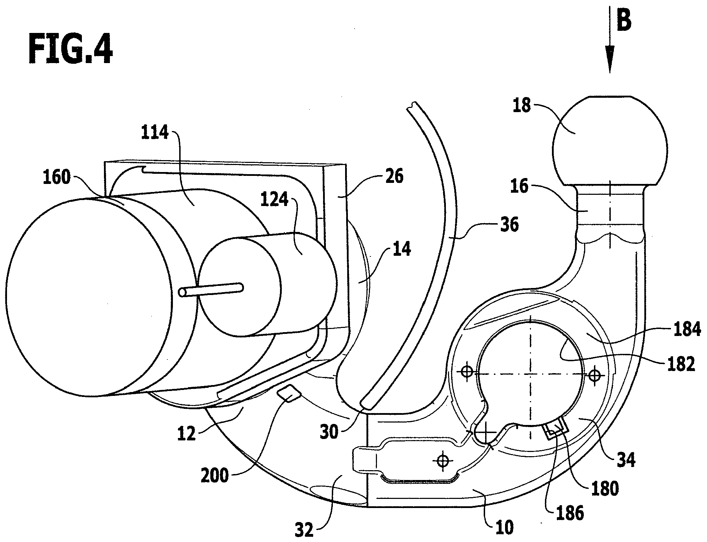

Der Schwenklagerkörper 14 ist durch eine als Ganzes mit 20 bezeichnete und als Schwenklagereinheit ausgebildete Halteeinheit um eine Schwenkachse 22 relativ zu einem fahrzeugfesten Träger 24 schwenkbar gelagert, wobei der Träger 24 vorzugsweise eine die als Schwenklagereinheit 20 ausgebildete Halteeinheit haltende Tragplatte 26 aufweist, welche sich vorzugsweise in einer zur Schwenkachse 22 senkrechten Ebene erstreckt und einen fahrzeugfesten Querträger 28, welcher in bekannter Weise heckseitig einer Fahrzeugkarosserie KA befestigbar ist, und zwar so, dass die Schwenklagereinheit 20 und der Träger 24 auf einer einer Fahrbahnoberfläche F abgewandten Seite einer Unterkante 30 einer Stoßfängereinheit 36 liegen, und durch die Stoßfängereinheit 36 abgedeckt sind (Fig. 4).

In der in Fig. 1, 2 und 3 dargestellten Arbeitsstellung untergreift der Kugelhals 10 mit einem sich an das erste Ende 12 anschließenden Abschnitt 32 die Unterkante 30 der Stoßfängereinheit 36, so dass das zweite Ende 16 und die Kupplungskugel 18 mitsamt einer Steckdosenaufnahme 34 auf einer der Fahrzeugkarosserie abgewandten Seite der hinteren Stoßfängereinheit 36 stehen, während in der Ruhestellung sowohl die Schwenklagereinheit 20 als auch der gesamte Kugelhals 10 mitsamt der Kupplungskugel 18 von der hinteren Stoßfängereinheit 36 gegen Sicht von hinten abgedeckt sind.

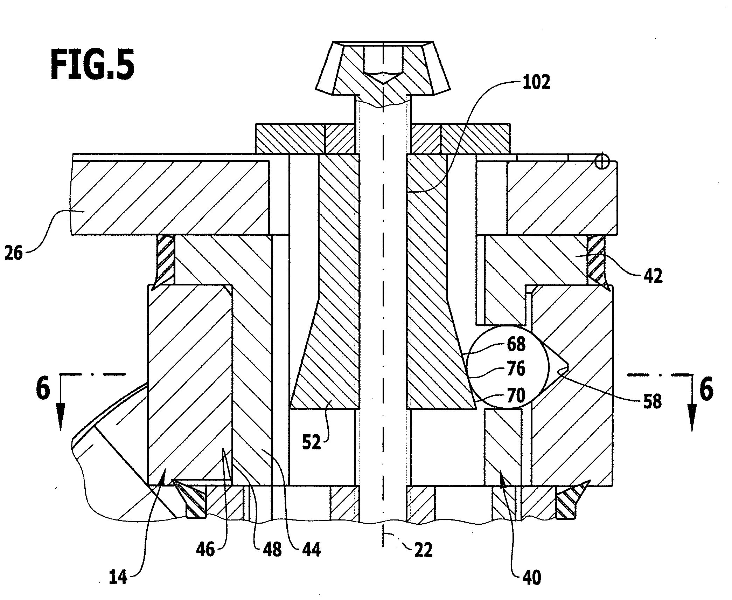

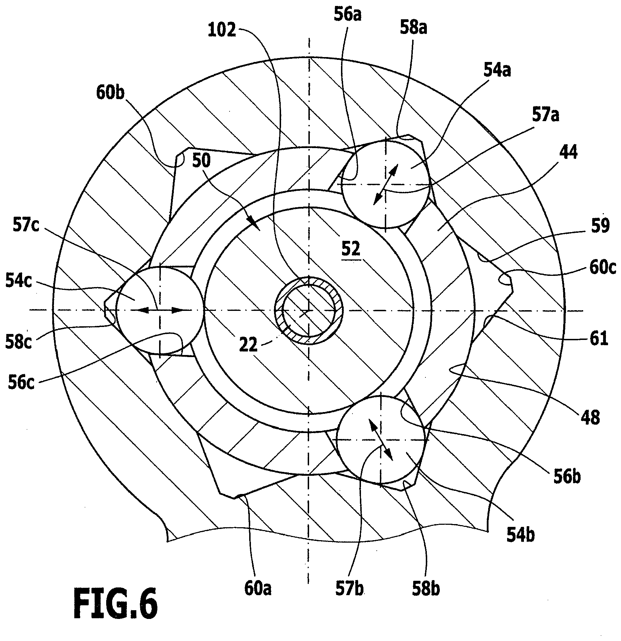

Die Schwenklagereinheit 20 umfasst, wie in Fig. 5 und 6 dargestellt, einen Führungskörper 40, welcher mit einem Flansch 42 fest mit der Tragplatte 26 verbunden ist und eine sich ausgehend von dem Flansch 42 von der Tragplatte 26 weg erstreckende Führungshülse 44, auf welcher der Schwenklagerkörper 14 drehbar gelagert ist. Hierzu umfasst die Führungshülse 44 eine zylindrische Außenmantelfläche 46, auf welcher der Schwenklagerkörper 14 mit einer zylindrischen Innenfläche 48 aufliegt und dadurch um die Schwenkachse 22 eine Drehführung erfährt, so dass der Schwenklagerkörper 14 derart relativ zum Führungskörper 40 drehbar ist, dass der Kugelhals 10 von der Arbeitsstellung A in die Ruhestellung R und umgekehrt verschwenkbar ist.

Der Führungskörper 40 bildet somit durch seine feste Verbindung mit der Trägerplatte 26 und dem Träger 24 die fahrzeugfeste Drehlagerung für den Schwenklagerkörper 14.

Zur Fixierung des Schwenklagerkörpers 14 in der Arbeitsstellung A und der Ruhestellung R ist die Schwenklagereinheit 20 mit einer als Ganzes mit 50 bezeichneten Drehblockiereinrichtung versehen, welche einen Betätigungskörper 52, mehrere durch den Betätigungskörper 52 beaufschlagbare Drehblockierkörper 54, beispielsweise Kugeln, welche in Führungsaufnahmen 56 der Führungshülse 44 in einer im wesentlichen radial zur Schwenkachse 22 verlaufenden Führungsrichtung 57 bewegbar geführt sind, sowie sich ausgehend von der Innenfläche 48 des Schwenklagerkörpers 14 in diesen hineinerstreckende erste Aufnahmen 58 und zweite Aufnahmen 60, mit denen die Drehblockierkörper 54 in der Arbeitsstellung A bzw. in der Ruhestellung R in Eingriff bringbar sind, wobei die Aufnahmen 58, 60 in radialer Richtung zur Schwenkachse 22 zunehmend einen geringeren Abstand voneinander aufweisende Wandflächen 59, 61 haben. Im einfachsten Fall verlaufen die Wandflächen 59, 61 als Kegelflächen aufeinanderzu.

Umfasst beispielsweise die Drehblockiereinrichtung 50, wie im Zusammenhang mit Fig. 5 und Fig. 6 beim ersten Ausführungsbeispiel dargestellt, einen Satz von drei Drehblockierkörpern 54a, 54b und 54c, so weist die Führungshülse 44 einen Satz von drei Führungsaufnahmen 56a, 56b und 56c auf, in welchen die Drehblockierkörper 54a, 54b und 54c in der im Wesentlichen radial zur Schwenkachse 22 verlaufenden Führungsrichtung 57 verschiebbar geführt sind, und der Schwenklagerkörper 14 ist mit einem Satz von ersten Aufnahmen 58a, 58b und 58c versehen, mit welchen die Drehblockierkörper 54a, 54b und 54c in der Arbeitsstellung A in Eingriff bringbar sind und mit einem Satz von zweiten Aufnahmen 60a, 60b und 60c versehen, mit welchen die Drehblockierkörper 54a, 54b und 54c in der Ruhestellung R in Eingriff bringbar sind. Bei geeignetem Winkelabstand der Arbeitsstellung A und der Ruhestellung R ist auch ein Satz von Aufnahmen für die Drehblockierung in beiden Stellungen einsetzbar.

Zum geeigneten Bewegen und Positionieren der Drehblockierkörper 54 in der Führungsrichtung 57 ist der Betätigungskörper 52 mit Rückzugsaufnahmen 62 versehen, die im einfachsten Fall durch eine gegenüber dem Führungskörper 40 radial zur Schwenkachse 22 zurückgesetzte zylindrische Fläche 63 des Betätigungskörpers gebildet ist und mit sich an die Rückzugsaufnahmen 62 in axialer Richtung 64 anschließenden Druckflächen 66, welche im einfachsten Fall als eine sich ausgehend von der Zylinderfläche 63 radial zur Schwenkachse 22 konisch erweiternde Konusfläche 67 gebildet sind. Die Drehblockierkörper 54 liegen in ihrer Freilaufstellung oder Lösestellung im Bereich der Rückzugsaufnahmen 62, das heißt der Zylinderfläche 63 des Betätigungskörpers 52 auf und sind damit in radialer Richtung zur Schwenkachse 22 so weit in den Führungskörper 40 hineinbewegt, dass sie nicht mehr über die Außenmantelfläche 46 der Führungshülse 44 überstehen.

Mittels der Druckflächen 66 sind die Drehblockierkörper 54 mit zunehmender Verschiebung des Betätigungskörpers 52 in axialer Richtung 64 radial zur Führungshülse 44 so weit nach außen bewegbar, bis sie in einer ersten Drehblockierstellung stehen, in welcher die Drehblockierkörper 54 in ihrer Führungsrichtung 57 so weit nach Außen geschoben sind, dass sie entweder in die Aufnahmen 58 oder die Aufnahmen 60 des Schwenklagerkörpers 14 eingreifen und somit diesen relativ zur Führungshülse 44 festlegen.

Bei dem beschriebenen Ausführungsbeispiel sind der Einfachheit halber die Druckflächen 66 als Konusflächen 67 dargestellt. Anstelle eines Konus kann jedoch jeder sich zunehmen und kontinuierlich radial zur Schwenkachse 22 erweiternde Körper vorgesehen sein, welcher in der Lage ist, beim Verschieben des Betätigungskörpers 52 in der axialen Richtung 64 die Drehblockierkörper 54 in ihren Führungsrichtungen 57 zu bewegen.

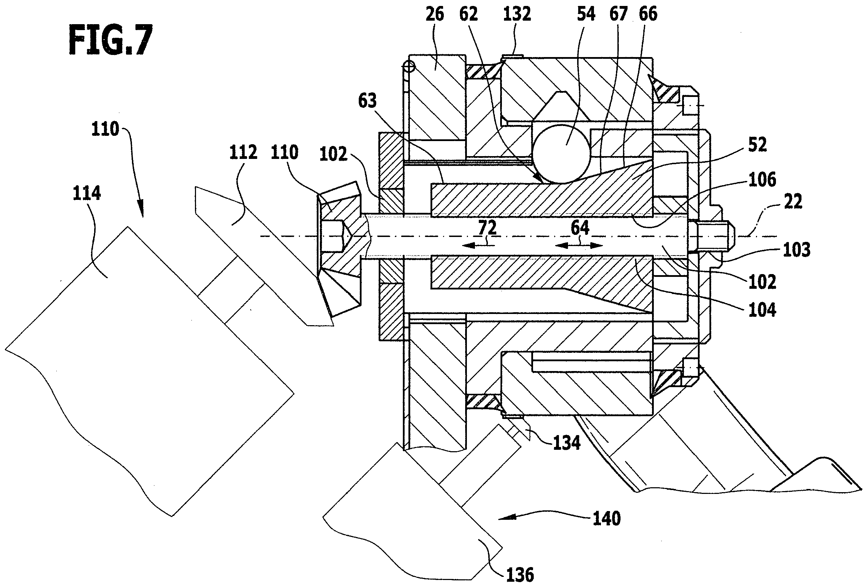

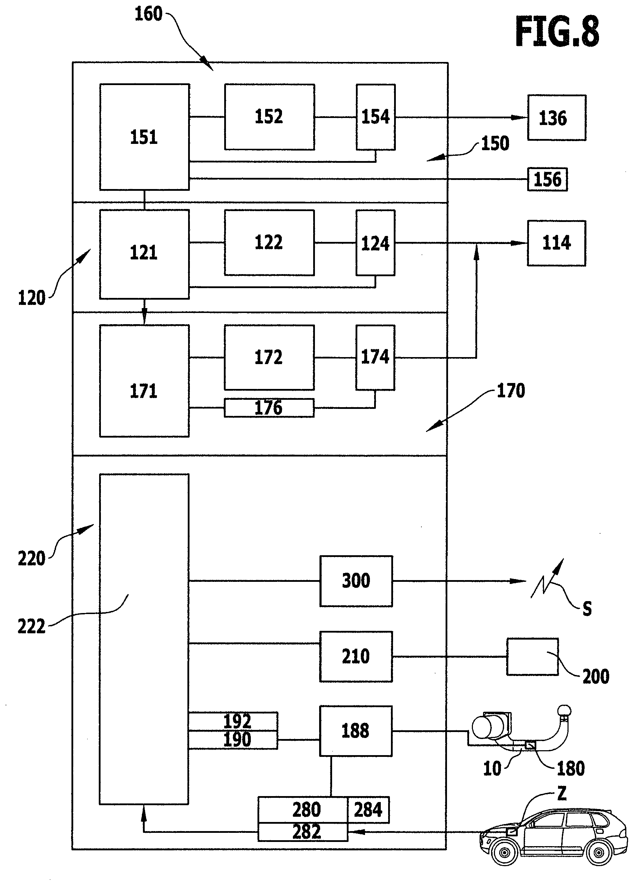

Um die Drehblockierkörper 54 entweder in ihrer Drehblockierstellung durch Beaufschlagen derselben mit den Druckflächen 66 zu halten oder in der Freilaufstellung auf der Rückzugsaufnahme 62 aufliegen zu lassen, ist der Betätigungskörper 52 in der axialen Richtung 64 parallel zur Schwenkachse 22, insbesondere koaxial zu dieser, verschiebbar, und zwar so, dass entweder die Rückzugsaufnahme 62 dem jeweiligen Drehblockierkörper 54 zugewandt ist und diesem, wie in Fig. 7 und 8 dargestellt, in seiner aktiven Stellung die Möglichkeit gibt, in die Führungshülse 44 in Richtung der Rückzugsaufnahme 62 in radialer Richtung zur Schwenkachse 22 hin einzutauchen und den jeweiligen Drehblockierkörpern 54 die Möglichkeit zu eröffnen, die ersten Aufnahmen 58 oder die zweiten Aufnahmen 60 hinsichtlich einer Drehung mitsamt dem Schwenklagerkörper 14 um die Schwenkachse 22 frei zu geben, so dass der Schwenklagerkörper 14 mit dem Kugelhals 10 relativ zur Führungshülse 44 ungehindert und frei drehbar ist, wie in Fig. 7 und 8 dargestellt, wobei in diesem Fall die Drehblockierkörper 54 sich nicht über die Außenmantelfläche 46 der Führungshülse 44 hinaus erstrecken.

Eine Verschiebung des Betätigungskörpers 52 bei auf der jeweiligen Rückzugsaufnahme 62 sitzendem Drehblockierkörper 54 in der Richtung 72 auf die Tragplatte 26 zu bewirkt, dass der jeweilige Drehblockierkörper 54 aus der Rückzugsaufnahme 62 heraus bewegt wird und durch die Druckfläche 66 in seiner Führungsrichtung 57 radial zur Schwenkachse 22 nach außen bewegt wird, somit seine erste Drehblockierstellung erreicht und dabei entweder in die jeweilige erste Aufnahme 58 oder in die jeweilige zweite Aufnahme 60 eintaucht und damit die freie Drehbarkeit des Schwenklagerkörpers 14 unterbindet.

Der Betätigungskörper 52 lässt sich in der Richtung 72 in der axialen Richtung 64 so bewegen, dass auf die Drehblockierkörper 54 zunächst auf Anfangsbereichen 68 der Druckflächen 66 wirken und dann immer weiter radial gegenüber der Schwenkachse 22 außenliegende Bereiche der jeweiligen Druckflächen 66 auf die Drehblockierkörper 54 wirken und diese somit zunehmend, beispielsweise in der Arbeitsstellung A des Kugelhalses 10, in die ersten Aufnahmen 58a, 58b und 58c hineindrücken, wie dies in Fig. 5 und 6 dargestellt ist, um somit eine im Wesentlichen spielfreie Fixierung des Schwenklagerkörpers 14 relativ zum Führungskörper 40, in diesem Fall zur Führungshülse 44, zu erreichen.

In dieser Drehblockierstellung der Drehblockierkörper 54 steht der Betätigungskörper 52 in seiner aktiven Stellung so, dass die Betätigungskörper 52, wie in Fig. 5 und 6 dargestellt, ungefähr auf Zwischenbereichen 76, die zwischen den Anfangsbereichen 68 und den größten radialen Abstand zur Schwenkachse 22 aufweisenden Endbereichen 70 der Druckflächen 66 liegen.

Eine spielfreie Verriegelung des Schwenklagerkörpers 14 durch die in ihrer Drehblockierstellung stehenden Drehblockierkörper 54 lässt sich besonders günstig dann erreichen, wenn der Drehblockierkörper 54 und die Aufnahmen 58 und 60 so gestaltet sind, dass bei zunehmendem Eintauchen eines der Drehblockierkörper 54 in eine der Aufnahmen 58 oder 60 und Anliegen der Drehblockierkörper 54 an einer Seite der Aufnahmen 58 und 60 jeder der Drehblockierkörper 54 mit der wechselwirkenden Aufnahme 58 oder 60 eine Verdrehung des Schwenklagerkörpers 14 bewirkt, wobei insgesamt der Satz von Drehblockierkörpern 54a bis 54c zur spielfreien Fixierung des Schwenklagerkörpers 14 mit in entgegengesetzten Richtungen wirkenden Drehmomenten 90, 92 auf die Gesamtheit der Aufnahmen 58 oder 60 einwirkt.

Um dem Betätigungskörper 52 die Möglichkeit zu eröffnen, in der Drehblockierstellung jeweils jeden der drei Drehblockierkörper 54 optimal zu beaufschlagen, ist vorgesehen, dass in der aktiven Stellung eine Zentrierung des Betätigungskörpers 52 entsprechend der Lage der Drehblockierkörper 54 erfolgt, so dass sich der Betätigungskörper 52 relativ zur Schwenkachse 22 bewegen und entsprechend der durch Fertigungstoleranzen bedingten Lage der Drehblockierkörper 54 sich innerhalb des Führungskörpers 40 selbstzentrieren kann, wobei die Selbstzentrierung des Betätigungskörpers 52 geringfügig von einer koaxialen Anordnung zur geometrischen Schwenkachse 22 abweichen kann.

Aufgrund der Selbstzentrierung wirken die Drehblockierkörper 54a, 54b und 54c in der jeweiligen Führungsrichtung 57a, 57b und 57c mit ungefähr gleich großen Kräften Ka, Kb und Kc auf die Aufnahmen 58a, 58b und 58c oder 60a, 60b und 60c, so dass auch die auf den Betätigungskörper 52 wirkenden Reaktionskräfte RKa, RKb und RKc ungefähr gleich groß sind.

Bei dem dargestellten Ausführungsbeispiel der erfindungsgemäßen Lösung sind die Drehblockierkörper 54 in den Führungsaufnahmen 56 in gleichen Winkelabständen um die Schwenkachse 22 herum angeordnet, so dass die durch die Selbstzentrierung ungefähr gleich großen Reaktionskräfte RKa, RKb, RKc auf einen der Drehblockierkörper 54a, 54b, 54c sich zu gleichen Teilen auf die anderen Drehblockierkörper 54b und 54c, 54a und 54c sowie 54a und 54b auswirken und sich somit insgesamt aufheben, so dass der Betätigungskörper 52 im Kräftegleichgewicht steht und keine zusätzliche Abstützung benötigt.

Im dargestellten Ausführungsbeispiel sind die Drehblockierkörper 54, wie beispielsweise in der Fig. 5 dargestellt, als Kugeln ausgebildet. Es besteht aber auch die Möglichkeit, die Drehblockierkörper beispielsweise als Rollen auszubilden.

Zum Bewegen des Betätigungskörpers 52 in der axialen Richtung 64 ist ein Drehblockierantrieb 100 vorgesehen, der eine als Ganzes mit 102 bezeichnete Gewindespindel aufweist, auf welcher der Betätigungskörper 52 sitzt. Die Gewindespindel 102 ist an der Tragplatte 26 beispielsweise über ein Axial-/Radiallager 103 in der axialen Richtung 64 unverschieblich gelagert.

Diese Gewindespindel 102 greift mit einem Außengewinde 104 in ein Innengewinde 106 des Betätigungskörpers 54 ein, der somit gleichzeitig eine Spindelmutter zu der Gewindespindel 102 darstellt. Es besteht die Möglichkeit, die Selbstzentrierung des Betätigungskörpers 52 durch ausreichend großes Spiel zwischen dem Außengewinde 104 und dem Innengewinde 106 zu erreichen.

Durch Drehen der Gewindespindel 102 lässt sich somit der Betätigungskörper 52 in der axialen Richtung 64 verschieben.

Vorzugsweise ist das Axial-/Radiallager 103 so ausgebildet, dass es die Gewindespindel 102 nicht exakt koaxial zur Schwenkachse 22 führt, sondern eine Ausweichbewegung der Gewindespindel 102 quer zur Schwenkachse 22 zulässt, um die bereits beschriebene Selbstzentrierung des Betätigungskörpers 52 in der Führungshülse 44 zu ermöglichen.

Zum Antreiben der Gewindespindel 102 umfasst der Drehblockierantrieb 100 ein auf einer dem Betätigungskörper 52 gegenüberliegenden Seite der Tragplatte 26 sitzendes Antriebsrad 110, welches mit einem Antriebsrad 112 eines elektrischen Antriebsmotors 114 des Drehblockierantriebs 100 in Eingriff steht, wobei der elektrische Antriebsmotor 114 beispielsweise als Elektromotor mit einem Untersetzungsgetriebe ausgebildet ist.

Der elektrische Antriebsmotor 114 des Drehblockierantriebs 100 ist über eine in Fig. 8 dargestellte Drehblockiersteuerung 120 ansteuerbar, welche einen Prozessor 121 und eine Leistungsstufe 122 umfasst, welch letztere den Antriebsstrom für den elektrischen Antriebsmotor 114 erzeugt.

Ein Verschwenken des Kugelhalses 10 kann in der Freigabestellung der Drehblockiereinrichtung 50 manuell erfolgen.

Bei dem dargestellten ersten Ausführungsbeispiel ist zum Verschwenken des Kugelhalses 10 der Schwenklagerkörper 14 beispielsweise mit einer externen Verzahnung 132 versehen, in welche ein Antriebsrad 134 eines mit einem elektrischen Antriebsmotor 136 versehenen Schwenkantriebs 140 eingreift.

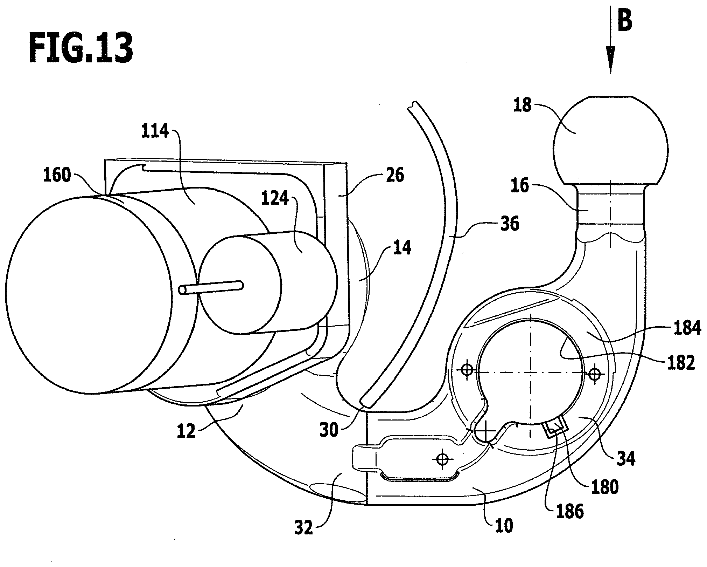

Der Schwenkantrieb 140 ist - wie in Fig. 13 dargestellt - durch eine als Ganzes mit 150 bezeichnete Schwenksteuerung steuerbar, wobei die Schwenksteuerung 150 einen Prozessor 151 umfasst und über eine Leistungsstufe 152 einen Strom zum Betreiben des elektrischen Antriebsmotors 136 erzeugt. Zwischen der Leistungsstufe 152 und dem elektrischen Antriebsmotor 136 ist ferner eine Stromerfassungseinheit 154 vorgesehen, welche den Strom durch den elektrischen Antriebsmotor 136 des Schwenkantriebs 140 erfasst und dem Prozessor 151 der Schwenksteuerung 150 zur Verfügung stellt.

Damit ist die Schwenksteuerung 150 in der Lage, bei Erreichen einer Endstellung, die zum Anstieg des Stroms durch den Elektromotor 136 führt, oder in einem Gefahrenfall, in dem die Bewegung des Kugelhalses 10 durch ein Hindernis blockiert ist, die Bestromung des elektrischen Antriebsmotors 136 durch die Leistungsstufe 152 zu beenden oder zu invertieren.

Beispielsweise sind Funktionen einer derartigen Schwenksteuerung 150 in der europäischen Patentanmeldung 1 002 671 A beschrieben.

Die Drehblockiersteuerung 120 und die Schwenksteuerung 150 sind Teil einer als Ganzes mit 160 bezeichneten Steuerung der Anhängekupplung, die, wie in Fig. 8 dargestellt, in der Lage ist, sowohl den Schwenkantrieb 140 als auch den Drehblockierantrieb 100 so zu steuern, so dass einerseits ein Verschwenken des Kugelhalses 10 von der Arbeitsstellung A in die Ruhestellung R und umgekehrt möglich ist, andererseits in der Arbeitsstellung und/oder der Ruhestellung R durch Überführen der Drehblockiereinrichtung 50 von der Freilaufstellung in die Drehblockierstellung den Schwenklagerkörper 14 in der Arbeitsstellung A bzw. der Ruhestellung R zu fixieren.

Wie in Fig. 8 dargestellt, umfasst die Steuerung 160 nicht nur die Schwenksteuerung 150 und die Drehblockiersteuerung 120, sondern zusätzlich noch eine Verspannsteuerung 170, mit welcher die Steuerung 160 in der Lage ist, die Drehblockiereinrichtung 50 in der Drehblockierstellung zu verspannen, das heißt, die Drehblockierkörper 54 ständig derart zu beaufschlagen, dass sie den Schwenklagerkörper 14 relativ zum Führungskörper 40 spielfrei festlegen, wobei hierzu der Betätigungskörper 52 so zu verschieben ist, dass dieser ständig mit einer Kraft auf den jeweiligen Drehblockierkörper 54 wirkt.

Der Grund für ein derartiges Verspannen des Drehblockierantriebs 50 in der Drehblockierstellung ist der, dass sich bereits ein geringes Spiel zwischen der jeweiligen Außenfläche 84 des jeweiligen Drehblockierkörpers 54 sowie den Seiten 88 oder 89 der Aufnahmen 58 oder den Seiten 86 der Führungsaufnahmen 56 dazu führt, dass Materialdeformationen auftreten, die das Material so weit deformieren, dass sich das Spiel vergrößert.

Liegt jedoch zwischen der Außenfläche 84 und den Seiten 88 oder 89 und den Seiten 86 kein Spiel vor, so wird die Materialdeformation vermieden und somit vermieden, dass sich das Spiel vergrößert und sich im Laufe der Zeit ein Zustand der Drehblockiereinrichtung 50 einstellt, in welchem diese keine spielfreie Fixierung zwischen dem Schwenklagerkörper 14 und dem Führungskörper 40 mehr zulässt.

Um diesen Verspannzustand der Drehblockiereinrichtung 50 zu erreichen, wird der elektrische Antriebsmotor 114 des Drehblockierantriebs 100 durch die Endstufe 122 auch bei Erreichen der Drehblockierstellung so lange betrieben, bis ein ausreichend großes Drehmoment am elektrischen Antriebsmotor 114 auftritt, das durch den Stromsensor 124 erkannt werden kann und bei welchem die Drehblockiersteuerung 120 die Endstufe 122 abschaltet.

Die Verspannsteuerung 170 umfasst einen Prozessor 171 und eine Endstufe 172, die in einem Verspannbetriebsmodus allerdings keinen Dauerstrom zum Betreiben des elektrischen Antriebsmotors 140 erzeugt, sondern einzelne aufeinanderfolgende Strompulse SP, welche durch Pulspausen PP voneinander getrennt sind.

Die Strompulse SP ergeben eine Pulsfolge PF, die allerdings in Abhängigkeit von einer Verspannung beim Übergang in den Verspannbetriebsmodus von unterschiedlicher Dauer sein kann.

Um eine Belastung B der Kupplungskugel 18 durch ein an dieser angreifendes Objekt zu erfassen, welche im Fall eines Anhängers, der mit einer Stützlast auf die Kupplungskugel 18 wirkt, in erster Näherung in der Arbeitsstellung des Kugelhalses 10 ungefähr vertikal ausgerichtet ist, ist, wie in Fig. 4 dargestellt, an dem Kugelhals 10 ein Sensor 180 vorgesehen, welcher in der Lage ist, Beschleunigungen zu erfassen.

Vorzugsweise ist der Sensor 180 nahe einer Aufnahme 182 für eine elektrische Kontakteinheit vorgesehen, wobei die Aufnahme 182 im Kugelhals 10 beispielsweise als Durchbruch ausgebildet ist, welcher von einem Versteifungsring 184 umgeben ist. Der Versteifungsring 184 ist dabei beispielsweise mit einer Tasche 186 versehen, in welcher der Sensor 180 sitzt.

Wie in Fig. 8 dargestellt, sind dem Sensor 180 eine Messwerterfassung 188 und eine nachfolgend angeordnete Auswerteeinheit 190 zugeordnet, welche Messwerte des Sensors 180 erfasst. Ist der Sensor 180 als Beschleunigungssensor ausgebildet, so wertet die Auswerteeinheit 190 die vom Sensor 180 erfassten Beschleunigungswerte des Kugelhalses 10 aus.

Vorzugsweise ist der Sensor 180 richtungsselektiv, so dass dieser beispielsweise in der Lage ist, in einer ersten, parallel zur Fahrtrichtung verlaufenden Richtung in einer zweiten, quer zur Fahrtrichtung und insbesondere ungefähr parallel zum Querträger 28 verlaufenden Richtung und in einer dritten, insbesondere ungefähr quer zur Fahrtrichtung verlaufenden Richtung gerichtete Beschleunigungen voneinander getrennt zu erfassen, auszuwerten und gegebenenfalls abzuspeichern.

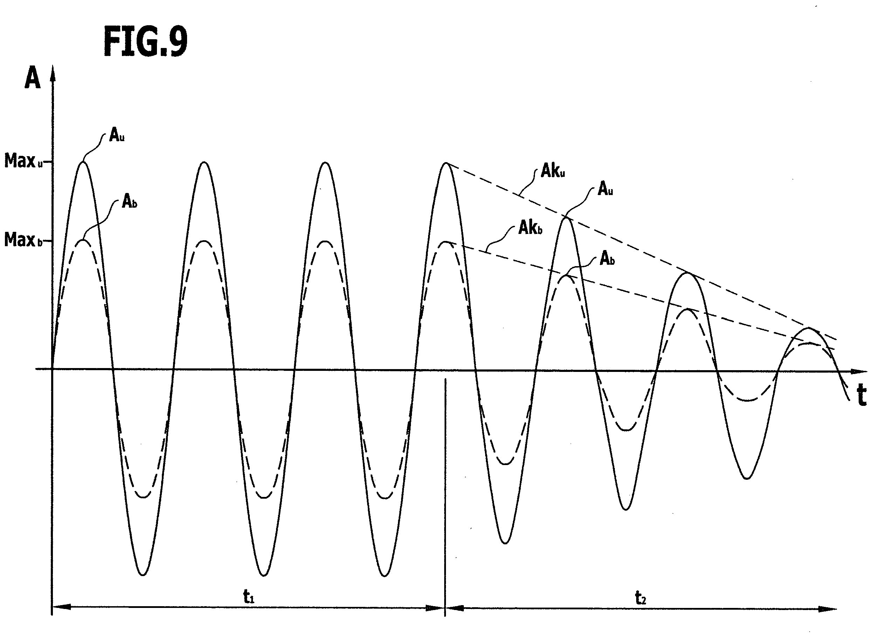

Die Erfassung der Belastung B der Kupplungskugel 18 erfolgt über eine Auswertung eines Verhaltens des Kugelhalses 10 im Falle von durch eine Erregung im Kugelhals 10 erzeugten mechanischen Schwingungen, wobei die mechanischen Schwingungen im Kugelhals 10 eine Frequenz f und eine Amplitude A aufweisen, die bei Nichtbelastung der Kupplungskugel 18 und des Kugelhalses 10, wie in Fig. 9 dargestellt, und bei konstanter Erregung einen Maximalwert Max₁ entsprechende Amplitudenwerte Aᵤ aufweist, welche bei Beendigung der Erregung beim Abklingen entsprechend einer Abklingkurve AK abnehmen, wie in Fig. 9 dargestellt.

Erfolgt jedoch eine Belastung der Kupplungskugel 18 und des Kugelhalses 10, so weisen die mechanischen Schwingungen Amplitudenwerte A_{b} auf, die, wie ebenfalls in Fig. 9 dargestellt, bei konstanter Erregung einem Maximalwert Max_{b} entsprechen und bei Beendigung der Erregung auch entsprechend einer Abklingkurve AK_{b} abklingen.

Dabei kann, wie beispielsweise exemplarisch in Fig. 9 dargestellt, die Frequenz f bei Belastung der Kupplungskugel 18 und des Kugelhalses 10 näherungsweise dieselbe sein, es kann sich aber auch die Frequenz der mechanischen Schwingungen ändern, so dass abweichend von der Darstellung in Fig. 9 sich die Belastung der Kupplungskugel 18 und des Kugelhalses 10 die Amplitude A der Schwingung von dem Amplitudenwert Aᵤ zum Amplitudenwert A_{b} ändert und außerdem sich gegebenenfalls auch die Frequenz f der mechanischen Schwingungen bei Belastung der Kupplungskugel 18 und des Kugelhalses 10 relativ zum unbelasteten Zustand der Kupplungskugel 18 und des Kugelhalses 10 ändern.

Die Belastung des Kugelhalses 18 muss nicht zwingend von der Stützlast herrühren, sondern kann auch nur durch eine Bedämpfung des Kugelhalses bei angehängtem Anhänger entstehen, ohne dass die Stützlast in vertikaler Richtung auf die Kupplungskugel 18 wirkt.

Die Auswerteeinheit 190 ist nun in der Lage, entweder bei einer konstanten Erregung der mechanischen Schwingung im Kugelhals 10 die Amplitude A zu erfassen und mit dem Amplitudenwert Aᵤ im unbelasteten Zustand zu vergleichen und daraus auf eine Belastung B der Kupplungskugel 18 und des Kugelhalses 10 zu schließen oder in der Lage, bei Abklingen der mechanischen Schwingung das Abklingverhalten gemäß der Abklingkurve AK in Relation zur Abklingkurve AKᵤ bei unbelasteter Kupplungskugel 18 und unbelastetem Kugelhals 10 auszuwerten.

Es besteht aber auch die Möglichkeit, dass die Auswerteeinheit 190 sowohl die Amplitude A als auch das Abklingverhalten AK auswertet und aus diesen Größen die Belastung B, die auf die Kupplungskugel 18 und den Kugelhals 10 einwirkt, ermittelt. Hierzu ist der Auswerteeinheit 190 ein Referenzwertspeicher 192 zugeordnet, welcher Referenzwerte Entweder für die Amplituden A und/oder die Abklingkurven AK und/oder auch die Frequenz f der mechanischen Schwingungen aufweist, so dass anhand dieser Referenzwerte ein Rückschluss auf die Belastung B möglich ist. Hierzu sind die Referenzwerte im Referenzwertspeicher 192 für das jeweilige System umfassend den Kugelhals 10, die Kupplungskugel 18 sowie die Halteeinheit 20 im Zuge eines Eichvorgangs zu erfassen.

Mit der Auswerteeinheit 190 besteht somit die Möglichkeit, zu erfassen, ob überhaupt eine Belastung B an der Kupplungskugel 18 und im Kugelhals 10 vorliegt, um dadurch beispielsweise die Präsenz eines Anhängers an der Anhängekupplung zu erkennen oder es besteht die Möglichkeit, zu ermitteln, wie groß die Belastung der Kupplungskugel 18 und des Kugelhalses 10 ist.

Eine derartige Ermittlung kann zur Ermittlung einer Stützlast des Kugelhalses 10 herangezogen werden, so dass nach dem Anhängen eines Anhängers eine Prüfung dahingehend möglich ist, ob die Stützlast des Anhängers, die auf die Kupplungskugel 18 und den Kugelhals 10 wirkt, eine Belastung B darstellt, die im Bereich der vorgesehenen Stützlast liegt oder ob die Belastung B so groß ist, dass die für die Anhängekupplung vorgesehene zulässige Stützlast überschritten ist.

Für eine derartige quantitative Erfassung der Stützlast, die auf die Kupplungskugel 18 und den Kugelhals 10 wirkt, sind mehrere Referenzwerte im Referenzwertspeicher 192 vorzusehen, die bei der Auswertung durch die Auswerteeinheit 190 herangezogen werden.

Die Erregung der mechanischen Schwingungen in dem Kugelhals 10 kann in unterschiedlichster Art und Weise erfolgen.

Bei dem in Fig. 4 beispielhaft dargestellten ersten Ausführungsbeispiel der erfindungsgemäßen Anhängekupplung ist im Bereich des ersten Endes 12, also beispielsweise nahe dem Schwenklagerkörper 14 oder am Schwenklagerkörper 14, zum Erregen mechanischer Schwingungen des Kugelhalses 10 ein Vibrationsgenerator 200 vorgesehen, welcher durch eine Erregeraktivierungseinheit 210 betreibbar ist, wobei die Erregeraktivierungseinheit 210 sowie die Auswerteeinheit 190 Teil einer Überwachungssteuerung 220 für den Kugelhals 10 ist, welche einen Ablaufprozessor 222 aufweist, der sowohl die Erregeraktivierungseinheit 210 als auch die Auswerteeinheit 190 betreibt und deren Funktion koordiniert.

Beispielsweise wird der Vibrationsgenerator 200 bei Schallfrequenz f betrieben, die im hörbaren Bereich liegen können, vorzugsweise jedoch höher sind als 500 Hz, noch besser höher als 800 Hz und noch besser höher als 1 kHz, um Störungen durch Umgebungseinflüsse zu reduzieren.

Zweckmäßigerweise ist vorgesehen, dass die Frequenzen niedriger sind als 15 kHz.

Der Vibrationsgenerator 200 kann dabei im Dauerbetrieb arbeiten. Eine verbesserte Störunterdrückung ist dann möglich, wenn der Vibrationsgenerator 200 gepulst arbeitet und dabei insbesondere eine mit den Pulsen synchronisierte Signalauswertung, beispielsweise in Lock-in Technik erfolgt.

Aus diesem Grund ist bei dem ersten Ausführungsbeispiel, wie in Fig. 9 dargestellt, zunächst während einer konstanten Erregung einer mechanischen Schwingung im Kugelhals 10 während eines Zeitraums t₁ der Vibrationsgenerator 200 aktiv und führt zu einer konstanten Erregung der mechanischen Schwingungen im Kugelhals 10, die sich in einer konstanten Amplitude A äußert, die bei nichtvorliegender Belastung B der Kupplungskugel 18 und des Kugelhalses 10 größer ist, nämlich den Amplitudenwert Aᵤ aufweist, jedoch bei Anliegen einer Belastung B an der Kupplungskugel 18 und im Kugelhals 10 kleiner ist und die Amplitudenwerte A_{b} aufweist, wobei die absolute Größe der Amplitude A_{b} von der Größe der Belastung B der Kupplungskugel 18 und des Kugelhalses 10 abhängt.

So sind beispielsweise bei größerer Belastung B der Kupplungskugel 18 und des Kugelhalses 10 die Amplitudenwerte A_{b} und somit auch die Maximalwerte Max_{b} niedriger als bei weniger großer Belastung B.

Ferner kann nach Beendigung der Aktivierung des Vibrationsgenerators 200 noch eine Auswertung des Abklingens der mechanischen Schwingung durch Auswertung der Abklingkurven AK erfolgen und somit bei belasteter Kupplungskugel 18 und belastetem Kugelhals 10 eine Auswertung der Amplituden A_{b}, und der Abklingkurve AK_{b}, wie ebenfalls in Fig. 9 dargestellt.

Durch Vergleich der Amplitudenwerte A_{b} mit den im Referenzwertspeicher 192 abgelegten Referenzwerten für die Amplituden A und/oder Vergleich der Abklingkurve AK_{b} mit im Referenzwertspeicher 192 abgelegten Referenzwerten für die Abklingkurve AK lässt sich dann die Belastung B der Kupplungskugel 18 und des Kugelhalses 10 ermitteln. Wie in Fig. 9 dargestellt, ist im Fall eines Vibrationsgenerators 200 davon auszugehen, dass die Frequenz f der mechanischen Schwingungen im Kugelhals 10 stets dieselbe ist, da die Frequenz durch den Vibrationsgenerator 200 vorgegeben wird.

Die Maximalwerte Max_{b} der Amplitudenwerte A_{b} und/oder die Abklingkurve AK_{b} können nicht nur von der Stützlast abhängig sein, sondern auf von der Masse des Anhängers, so dass diese als weiterer Einflussfaktor von der Auswerteeinheit 190 zu berücksichtigen ist. Im einfachsten Fall erfolgt eine Auswahl der Referenzwerte in Abhängigkeit von der Masse des Anhängers.

Eine verbesserte Auswertung, insbesondere zum Reduzieren von Störungen, sieht vor, die auf den Sensor 180 einwirkenden Beschleunigungen richtungsselektiv zu erfassen und auszuwerten.

Dabei können außerdem zu geringe Beschleunigungswerte ignoriert werden. Die für die Auswerteeinheit 190 vorgesehenen Beschleunigungswerte liegen unterhalb von 100 m/sec², d.h. 10g.

Vorzugsweise sind als Voraussetzung für die Erfassung der Messwerte Mindestbeschleunigungen von 0,5 m/sec² vorgesehen, wenn es darum geht, diese als Messwerte auszuwerten.

Werden die Beschleunigungen richtungsselektiv erfasst, so erfolgt auch ein Vergleich mit richtungsselektiven Referenzwerten, wodurch die Möglichkeit besteht, den Einfluss von Störquellen die Beschleunigungen erzeugen, zu reduzieren oder zu unterdrücken.

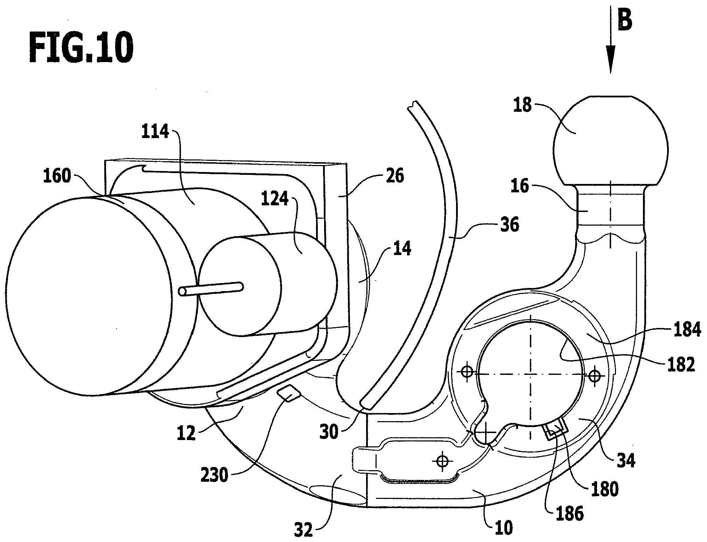

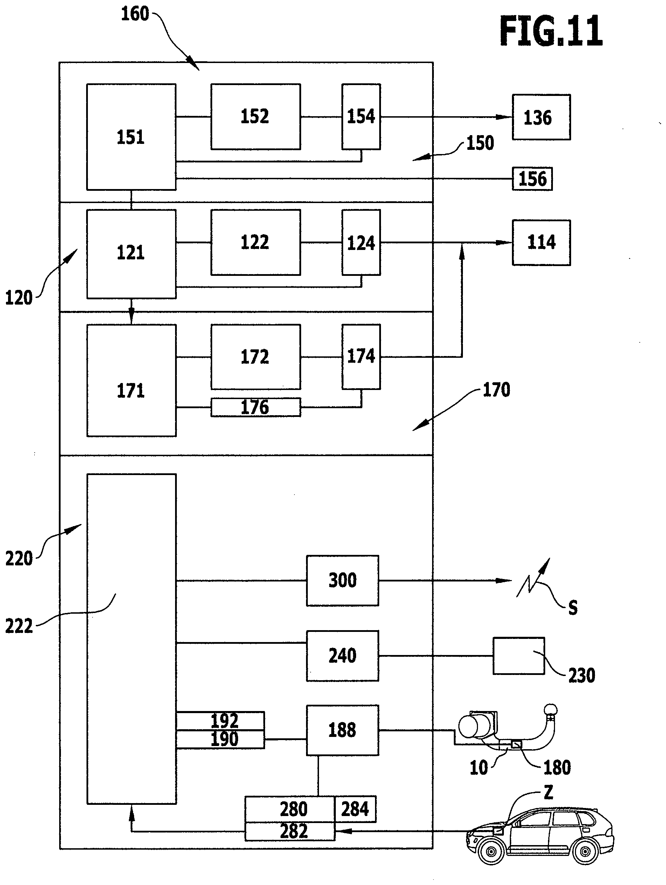

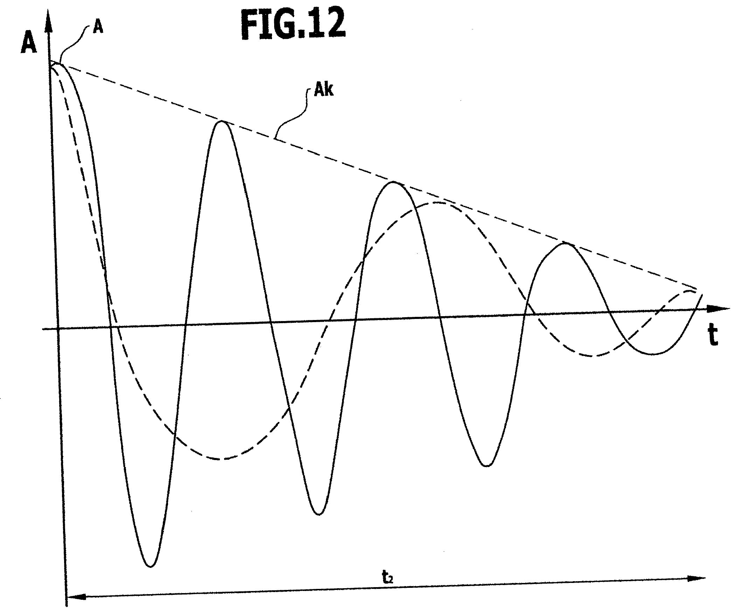

Alternativ zum Vorsehen des Vibrationsgenerators 200 ist bei einem zweiten Ausführungsbeispiel, dargestellt in den Fig. 10 bis 12 ein Impulsgenerator 230 vorgesehen, welcher zur Erzeugung der mechanischen Schwingungen im Kugelhals 10 einen einmaligen mechanischen Impuls erzeugt. Dieser Impulsgenerator 230 ist ebenfalls durch eine Erregeraktivierungseinheit 240 aktivierbar.

Die dabei im Kugelhals 10 erzeugten mechanischen Schwingungen sind hinsichtlich ihrer Frequenz f und Amplitude A durch die Form des Kugelhalses 10 und der Kupplungskugel 18 sowie die Materialparameter derselben mitbestimmt, so dass insbesondere sich die Frequenz f der mechanischen Schwingungen nach dem einmaligen Impuls entsprechend den vorgegebenen Systemparametern einstellt.

Die Frequenzen f liegen beispielsweise in denselben Wertebereichen wie beim ersten Ausführungsbeispiel dargelegt.

Ferner liegt in diesem Fall auch kein Zeitraum t₁ mit einer konstanten Erregung der mechanischen Schwingungen vor, sondern es wird unmittelbar nach dem Impuls sich eine mechanische Schwingung einstellen, die während des Zeitraums t₂ abklingt. Die Auswerteeinheit 190 erfasst daher die Abklingkurven AK der Amplituden A und wertet dieses Abklingverhalten in Abhängigkeit von im Referenzwertspeicher 192 gespeicherten Referenzwerten für die Abklingkurven der mechanischen Schwingung nach Setzen des mechanischen Impulses aus.

Darüber hinaus besteht noch die Möglichkeit, auch die Frequenz f der sich ein-stellenden mechanischen Schwingungen auszuwerten, die bei diesem Ausführungsbeispiel bei nicht vorliegender Belastung B an der Kupplungskugel 18 und im Kugelhals 10 anders sein kann als bei an der Kupplungskugel 18 und im Kugelhals 10 vorliegender Belastung B. Bei diesem Ausführungsbeispiel besteht somit die Möglichkeit, dass abhängig von der Belastung B der Kupplungskugel 18 und des Kugelhalses 10 sowohl das Abklingverhalten AK als auch die Frequenz f der mechanischen Schwingung sich ändern, so dass die Auswerteeinheit 190 beide Größen durch Vergleich mit im Referenzwertspeicher 192 abgelegten Referenzwerten auswerten kann.

Bei diesem Ausführungsbeispiel erfolgt ferner die Erfassung der Messwerte des Sensors 180 in zeitlicher Korrelation zur Erzeugung des mechanischen Impulses durch den Impulsgenerator 230, so dass während der Abgabe des mechanischen Impulses an den Kugelhals 10 keine Messung erfolgt, jedoch kurze Zeit nach Beendigung der Erzeugung des mechanischen Impulses die Aufnahme der Messwerte des Sensors 180 mittels der Messwerterfassung und die Auswertung derselben beginnen kann.

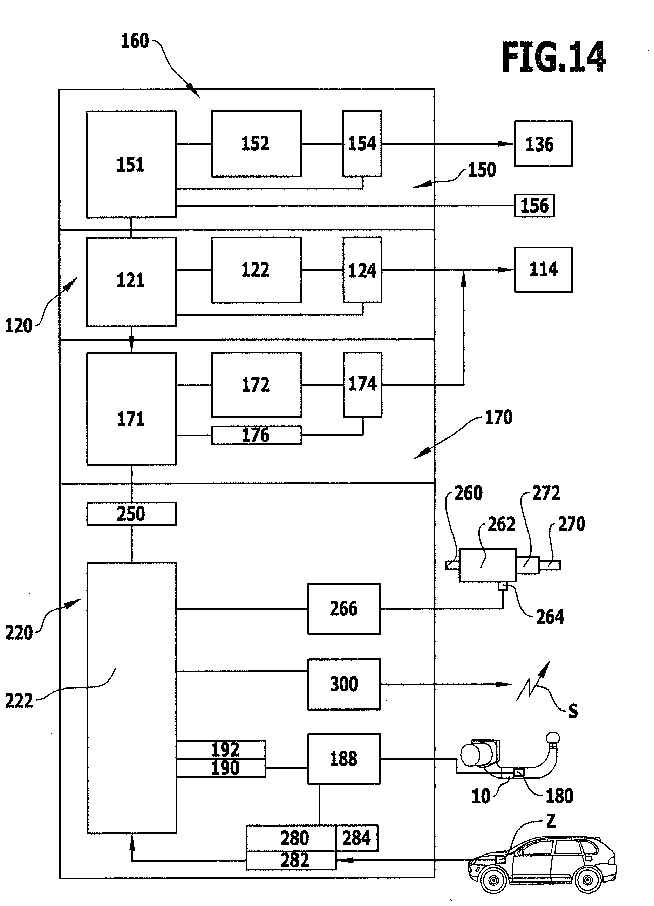

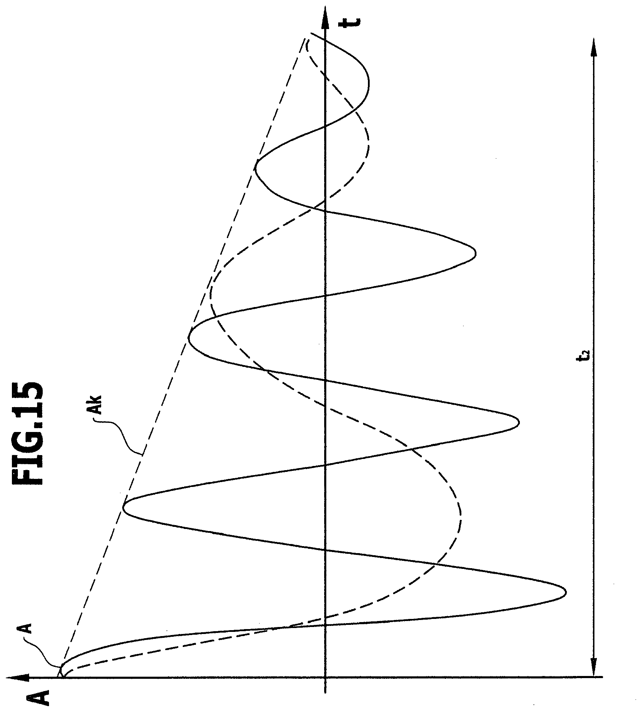

Bei einer dritten Ausführungsform einer erfindungsgemäßen Anhängekupplung, dargestellt in den Fig. 13 bis 15, ist weder ein Vibrationsgenerator noch ein Impulsgenerator vorgesehen. Vielmehr erfolgt die Erzeugung der mechanischen Schwingungen im Kugelhals 10 durch die Verspannsteuerung 170, welche durch eine Erregeraktivierungseinheit 250 aktivierbar ist. Das Aktivieren der Verspannsteuerung 170 und somit das Erreichen des spielfreien Zustandes der Drehblockiereinrichtung 50 erzeugt ebenfalls einen mechanischen Impuls, welcher durch das Lagerteil 14 auf den Kugelhals 10 übertragen wird und ebenfalls eine mechanische Schwingung in dem Kugelhals 10 anregt, die sich analog zu einer mechanischen Schwingung nach Erregung durch den Impulsgenerator verhält, wie in Fig. 15 dargestellt.

Das heißt, dass auch bei diesem Ausführungsbeispiel die Auswerteeinheit 190 einerseits das Abklingverhalten AK der mechanischen Schwingung und andererseits gegebenenfalls auch eine Änderung der Frequenz f der mechanischen Schwingung auswertet, die davon abhängig sind, ob und wie groß die Belastung B, die auf die Kupplungskugel 18 und den Kugelhals 10 wirkt, ist.

Das Spektrum der Frequenzen f der mechanischen Schwingungen liegt auch bei diesem Ausführungsbeispiel beispielsweise schwerpunktmäßig in den zum ersten Ausführungsbeispiel genannten Wertebereichen.

Bei allen vorstehend beschriebenen Ausführungsbeispielen erfolgt die Erfassung der Belastung B der Kupplungskugel 18 und des Kugelhalses 10 beispielsweise bei stehendem Fahrzeug und in einem Zeitraum, der zwischen einem Anhängen des Anhängers und einem Fahren des Fahrzeugs mit angehängtem Anhänger schneller als Schrittgeschwindigkeit liegt.

Die Tatsache, dass an die Anhängekupplung ein Anhänger angehängt wurde, lässt sich beispielsweise dadurch ermitteln, dass eine Verbindung einer zwischen einem Bordnetz 260 des Kraftfahrzeugs und dem elektrischen Versorgungsnetz 270 des Anhängers erfolgt, beispielsweise dadurch, dass eine Steckverbindung zwischen einem der Anhängekupplung zugeordneten Kontakteinheit 262 des Kraftfahrzeugs und einem Kontaktelement 272 des Anhängers, beispielsweise üblicherweise einem am Anhänger vorgesehenen Stecker, erfolgt.

Die Herstellung dieser Verbindung zwischen dem Bordnetz 260 des Kraftfahrzeugs und dem Versorgungsnetz 270 des Anhängers wird von einem Detektor 264 und einer zugeordneten Detektoreinheit 266 erkannt und aktiviert die Überwachungssteuerung 220, so dass diese die Belastung B der Kupplungskugel 18 und des Kugelhalses 10 erfasst und je nach dem von der Auswerteeinheit 190 ermittelten Ergebnis eine am Kraftfahrzeug vorgesehene

Anzeige ansteuert, die anzeigt, ob eine Belastung der Kupplungskugel 18 und des Kugelhalses 10 vorliegt und/oder ob die Belastung im Bereich der vorgesehenen Stützlast liegt oder ob die vorgesehene Stützlast der Anhängekupplung überschritten wurde.

Bei einer weiteren Ausführungsform der erfindungsgemäßen Anhängekupplung kann ergänzend der als Beschleunigungssensor arbeitende Sensor 180 auch dazu eingesetzt werden, jede Art von Beschleunigungen im Kugelhals 10 zu erfassen, und zwar auch Beschleunigungen, die in keinem Zusammenhang mit einer definierten Erregung von Schwingungen im Kugelhals 10 sind.

Derartige Beschleunigungen können beispielsweise beim Fahrbetrieb auftretende Beschleunigungen sein, die auch im Kugelhals 10 feststellbar sind.

In diesem Fall werden im normalen Fahrbetrieb auftretende Beschleunigungen unterdrückt und nur Beschleunigungswerte erfasst, die größer sind als die bei einer Vollbremsung, beispielsweise 50 m/sec² oder 5g, wobei diese Beschleunigungen dadurch auftreten, dass ein Aufprall auf den Kugelhals 10 beispielsweise im Zusammenhang mit einem Unfall erfolgt.

In diesem Fall arbeitet eine Beschleunigungserfassungseinheit 280 unabhängig davon, ob ein Anhänger an der Anhängekupplung angehängt ist oder nicht, so dass diese über die Messwerterfassung 188 des Sensors 180 die Beschleunigungswerte erfasst, die über einem in einem Referenzwertspeicher 282 abgelegten Minimalwert der Beschleunigung liegen, und diese Messwerte in einem eigenen Speicher 284 speichert und/oder einem Zentralcomputer Z des Kraftfahrzeugs übermittelt, die in der Lage sind, diese Messwerte entweder mit zeitlicher Korrelation oder gegebenenfalls auch ohne zeitliche Korrelation abzuspeichern, so dass sich später aus dem Speicher 284 oder dem Zentralcomputer Z des Kraftfahrzeugs auslesen lässt, ob die Anhängekupplung, insbesondere der Kugelhals 10, in einen Verkehrsunfall verwickelt waren oder nicht.

Alternativ oder ergänzend dazu lässt sich der Sensor 180 mit der Beschleunigungserfassungseinheit 280 aber auch dazu einsetzen, ein abgestelltes und verschlossenes Fahrzeug auch dahingehend zu überwachen, ob das Fahrzeug im abgestellten und abgeschlossenen Zustand Beschleunigungen unterworfen wurde. In diesem Fall kann die Bandbreite der erfassten Beschleunigungen größer gewählt werden, so dass auch Beschleunigungswerte, die niedriger sind als die bei einer Vollbremsung erfasst werden. Die Bandbreite der erfassten Beschleunigungswerte kann insbesondere bis zu Beschleunigungswerten reichen, die bei einem Aufladen des stehenden Fahrzeugs auf einen Transporter auftreten.

Die erfassten Beschleunigungen können beispielsweise dadurch entstehen, dass das Fahrzeug im abgestellten und abgeschlossenen Zustand von einem weiteren Fahrzeug angefahren und somit in einen Unfall verwickelt wurde oder auch darin, dass es gestohlen wird.

Erkennt in diesen Fällen die Ablaufsteuerung 222 aufgrund einer Meldung der Beschleunigungserfassungseinheit 280 dass eine ungewöhnlich große Beschleunigung an dem Kugelhals 10 festgestellt wird, so kann die Ablaufsteuerung 222 über eine Sendeeinheit 300 veranlassen, dass ein eine derartige ungewöhnliche Beschleunigung übermittelndes Signal S beispielsweise über das Mobilfunknetz an ein vorab definiertes Empfangsgerät, beispielsweise ein Mobiltelefon, gesendet wird, so dass in diesem Fall der Fahrer in der Lage ist, zu erkennen, dass an seinem Fahrzeug ein unüblicher Beschleunigungszustand aufgetreten ist.

Die Einrichtung umfassend den Beschleunigungssensor 180, die Messwerterfassung 188 und die Beschleunigungserfassungseinheit 280 mit dem Referenzwertspeicher 282 und dem Speicher 284 kann aber auch unabhängig von einer Anhängekupplung dem Zentralcomputer Z eines Kraftfahrzeugs zugeordnet werden, der dann als Ablaufsteuerung wirkt und die Sendeeinheit 300 ansteuert, so dass alle vorstehend beschriebenen Funktionen bei der Erfassung von Beschleunigungen des Fahrzeugs auch unabhängig von einer Anhängerkupplung realisierbar sind.

## Patentansprüche

1. Anhängekupplung für Kraftfahrzeuge umfassend
eine fahrzeugfest angeordnete Halteeinheit (20),
einen Kugelhals (10) welcher in einer Arbeitsstellung (A) im Bereich eines ersten Endes (12) mit der Halteeinheit (20) verbunden ist, und eine Kupplungskugel (18), welche an einem zweiten Ende (16) des Kugelhalses (10) angeordnet ist, wobei eine Beschleunigungserfassungseinheit (280) mittels eines an dem Kugelhals (10) angeordneten Beschleunigungssensors (180) auf den Kugelhals (10) einwirkende fremdausgelöste Beschleunigungen erfasst,
**dadurch gekennzeichnet , dass** der Beschleunigungssensor (180) Beschleunigungen richtungsselektiv erfasst, dass der Beschleunigungssensor (180) ergänzend durch eine Erregung im Kugelhals (10) erzeugte mechanische Schwingungen erfasst und den Schwingungen entsprechende Messwerte erzeugt, dass eine mit dem Beschleunigungssensor (180) zusammenwirkende und die auf den Beschleunigungssensor (180) wirkenden Beschleunigungen richtungsselektiv auswertende Auswerteeinheit (190) vorgesehen ist, welche aus dem Verhalten der mechanischen Schwingungen im Kugelhals (10) die mechanische Bedämpfung (B) der Kupplungskugel (18) in der Arbeitsstellung (A) ermittelt.

2. Anhängekupplung nach Anspruch 1, **dadurch gekennzeichnet, dass** die Beschleunigungserfassungseinheit (280) die Messwerte der fremdausgelösten Beschleunigungen mit Referenzwerten vergleicht.

3. Anhängekupplung nach Anspruch 1 oder 2, **dadurch gekennzeichnet, dass** ein Abspeichern der durch fremdausgelöste Beschleunigungen erzeugten Messwerte erfolgt.

4. Anhängekupplung nach einem der Ansprüche 1 bis 3, **dadurch gekennzeichnet, dass** ein Aussenden eines Signals beim Auftreten eines fremdausgelösten Beschleunigungen erfolgt.

5. Anhängekupplung nach einem der voranstehenden Ansprüche, **dadurch gekennzeichnet, dass** die Beschleunigungserfassungseinheit (280) die Messwerte an einen zentralen Bordcomputer liefert.

6. Anhängekupplung nach einem der voranstehenden Ansprüche, **dadurch gekennzeichnet, dass** die Auswerteeinheit (190) und insbesondere auch die Beschleunigungserfassungseinheit (280) während des Fahrbetriebs aktiviert sind, um beispielsweise Belastungen des Kugelhalses während des Fahrbetriebs, insbesondere beim Beschleunigen und Abbremsen des Kraftfahrzeugs, zu erkennen und diese Belastungen zu ermitteln.

7. Anhängekupplung nach einem der voranstehenden Ansprüche, **dadurch gekennzeichnet, dass** die Beschleunigungserfassungseinheit (280) während des Fahrbetriebs des Kraftfahrzeugs aktiviert ist, so dass Beschleunigungen während des Fahrbetriebs, und gegebenenfalls auch ein während des Fahrbetriebs auftretender Unfall, erfasst werden können.

8. Anhängekupplung nach einem der voranstehenden Ansprüche, **dadurch gekennzeichnet, dass** die Beschleunigungserfassungseinheit (280) bei stehendem Kraftfahrzeug, insbesondere bei geparktem und abgeschlossenem Fahrzeug, aktiviert ist.

9. Anhängekupplung nach einem der voranstehenden Ansprüche, **dadurch gekennzeichnet, dass** die Auswerteeinheit (190) die Messwerte mit abgespeicherten Referenzwerten (192) vergleicht.

10. Anhängekupplung nach einem der voranstehenden Ansprüche, **dadurch gekennzeichnet, dass** die Erregung des Kugelhalses (10) durch eine Ansteuerung eines die Erregung erzeugenden Vorgangs seitens einer Erregersteuerungseinheit (210, 240, 250) der Anhängekupplung erfolgt und dass insbesondere die Erregersteuerungseinheit (210, 240, 250) mindestens einen auf den Kugelhals (10) einwirkenden Impuls auslöst.

11. Anhängekupplung nach einem der voranstehenden Ansprüche, **dadurch gekennzeichnet, dass** der Kugelhals (10) eine mechanische Erregung erfährt.

12. Anhängekupplung nach einem der voranstehenden Ansprüche, **dadurch gekennzeichnet, dass** die Auswerteeinheit (190) die Messwerte in ihrer zeitlichen Relation zur Erregung des Kugelhalses (10) auswertet.

13. Anhängekupplung nach einem der voranstehenden Ansprüche, **dadurch gekennzeichnet, dass** die Auswerteeinheit (190) die Übertragung der mechanischen Schwingungen im Kugelhals (10) erfasst und auswertet.

14. Anhängekupplung nach einem der voranstehenden Ansprüche, **dadurch gekennzeichnet, dass** die Auswerteeinheit (190) ein Abklingen der mechanischen Schwingungen im Kugelhals (10) auswertet.

## Claims

1. Trailer coupling for motor vehicles comprising
a holding unit (20) arranged securely on the vehicle,
a ball neck (10) connected to the holding unit (20) in a working position (A) in the region of a first end (12) and a coupling ball (18) arranged at a second end (16) of the ball neck (10), wherein an acceleration detection unit (280) detects accelerations triggered externally and acting on the ball neck (10) by means of an acceleration sensor (180) arranged on the ball neck (10), **characterized in that** the acceleration sensor (180) detects accelerations in a directionally selective manner, that the acceleration sensor (180) also detects mechanical vibrations generated by any excitation in the ball neck (10) and generates measurement values corresponding to the vibrations, that an evaluating unit (190) interacting with the acceleration sensor (180) and evaluating the accelerations acting on the acceleration sensor (180) in a directionally selective manner is provided, said evaluating unit ascertaining the mechanical damping (B) of the coupling ball (18) in the working position (A) from the behaviour of the mechanical vibrations in the ball neck (10).

2. Trailer coupling as defined in claim 1, **characterized in that** the acceleration detection unit (280) compares the measurement values of the accelerations triggered externally with reference values.

3. Trailer coupling as defined in claim 1 or 2, **characterized in that** the measurement values generated by accelerations triggered externally are memorized.

4. Trailer coupling as defined in any one of claims 1 to 3, **characterized in that** a signal is sent when accelerations triggered externally occur.

5. Trailer coupling as defined in any one of the preceding claims, **characterized in that** the acceleration detection unit (280) sends the measurement values to a central on-board computer.

6. Trailer coupling as defined in any one of the preceding claims, **characterized in that** the evaluating unit (190) and, in particular, the acceleration detection unit (280), as well, are activated during vehicle operation in order to recognize, for example, loads on the ball neck during vehicle operation, in particular during the acceleration and braking of the motor vehicle, and to ascertain these loads.

7. Trailer coupling as defined in any one of the preceding claims, **characterized in that** the acceleration detection unit (280) is activated during operation of the motor vehicle so that accelerations can be detected during vehicle operation and, where applicable, also any accident occurring during vehicle operation.

8. Trailer coupling as defined in any one of the preceding claims, **characterized in that** the acceleration detection unit (280) is activated when the motor vehicle is stationary, in particular when the vehicle is parked and locked.

9. Trailer coupling as defined in any one of the preceding claims, **characterized in that** the evaluating unit (190) compares the measurement values with stored reference values (192).

10. Trailer coupling as defined in any one of the preceding claims, **characterized in that** the excitation of the ball neck (10) results from an activation of a process generating the excitation on the part of an excitation control unit (210, 240, 250) of the trailer coupling and that, in particular, the excitation control unit (210, 240, 250) triggers at least one pulse acting on the ball neck (10).

11. Trailer coupling as defined in any one of the preceding claims, **characterized in that** the ball neck (10) experiences a mechanical excitation.

12. Trailer coupling as defined in any one of the preceding claims, **characterized in that** the evaluating unit (190) evaluates the measurement values in their temporal relation to the excitation of the ball neck (10).

13. Trailer coupling as defined in any one of the preceding claims, **characterized in that** the evaluating unit (190) detects and evaluates the transfer of the mechanical vibrations in the ball neck (10).

14. Trailer coupling as defined in any one of the preceding claims, **characterized in that** the evaluation unit (190) evaluates any abatement in the mechanical vibrations in the ball neck (10).

## Revendications

1. Attelage pour véhicules automobiles, comprenant :
une unité de maintien (20) fixement disposée sur le véhicule,
un col de boule d'attelage (10), lequel est dans une position de travail (A) relié à l'unité de maintien (20) au niveau d'une première extrémité (12), et une boule d'attelage (18), laquelle est disposée à une deuxième extrémité (16) du col de boule d'attelage (10), dans lequel une unité de détection d'accélération (280) détecte au moyen d'un capteur d'accélération (180) disposé sur le col de boule d'attelage (10) des accélérations déclenchées extérieurement agissant sur le col de boule d'attelage (10),
**caractérisé en ce que** le capteur d'accélération (180) détecte des accélérations en sélectionnant la direction, **en ce que** le capteur d'accélération (180) détecte en complément des vibrations mécaniques générées par une excitation dans le col de boule d'attelage (10) et génère des valeurs de mesure correspondant aux vibrations, **en ce qu'**est prévue une unité d'évaluation (190) coopérant avec le capteur d'accélération (180) et évaluant en sélectionnant la direction les accélérations agissant sur le capteur d'accélération (180), laquelle détermine l'amortissement (B) mécanique de la boule d'attelage (18) en position de travail (A) sur la base du comportement des vibrations mécaniques dans le col de boule d'attelage (10).

2. Attelage selon la revendication 1, **caractérisé en ce que** l'unité de détection d'accélération (280) compare les valeurs de mesure des accélérations déclenchées extérieurement avec des valeurs de référence.

3. Attelage selon la revendication 1 ou 2, **caractérisé en ce qu'**une mémorisation des valeurs de mesure générées par des accélérations déclenchées extérieurement est effectuée.

4. Attelage selon l'une des revendications 1 à 3, **caractérisé en ce qu'**une émission d'un signal a lieu à l'apparition d'une accélération déclenchée extérieurement.

5. Attelage selon l'une des revendications précédentes, **caractérisé en ce que** l'unité de détection d'accélération (280) transmet les valeurs de mesure à un ordinateur de bord central.

6. Attelage selon l'une des revendications précédentes, **caractérisé en ce que** l'unité d'évaluation (190) et avec elle en particulier l'unité de détection d'accélération (280) sont activées pendant la conduite pour détecter notamment des contraintes du col de boule d'attelage pendant la conduite, en particulier à l'accélération et au freinage du véhicule automobile, et pour déterminer lesdites contraintes.

7. Attelage selon l'une des revendications précédentes, **caractérisé en ce que** l'unité de détection d'accélération (280) est activée pendant la conduite du véhicule automobile, si bien que des accélérations peuvent être détectées pendant la conduite, et le cas échéant également un accident survenant pendant la conduite.

8. Attelage selon l'une des revendications précédentes, **caractérisé en ce que** l'unité de détection d'accélération (280) est activée lorsque le véhicule automobile est à l'arrêt, en particulier lorsque le véhicule est stationné et fermé.

9. Attelage selon l'une des revendications précédentes, **caractérisé en ce que** l'unité d'évaluation (190) compare les valeurs de mesure avec des valeurs de référence (192) mémorisées.

10. Attelage selon l'une des revendications précédentes, **caractérisé en ce que** l'excitation du col de boule d'attelage (10) est effectuée par commande d'un processus générateur de l'excitation du côté d'une unité de commande d'excitateur (210, 240, 250) de l'attelage, et **en ce que** l'unité de commande d'excitateur (210, 240, 250) en particulier déclenche au moins une impulsion agissant sur le col de boule d'attelage (10).

11. Attelage selon l'une des revendications précédentes, **caractérisé en ce que** le col de boule d'attelage (10) subit une excitation mécanique.

12. Attelage selon l'une des revendications précédentes, **caractérisé en ce que** l'unité d'évaluation (190) évalue la relation temporelle des valeurs de mesure pour l'excitation du col de boule d'attelage (10).

13. Attelage selon l'une des revendications précédentes, **caractérisé en ce que** l'unité d'évaluation (190) détecte et évalue la transmission des vibrations mécaniques dans le col de boule d'attelage (10).

14. Attelage selon l'une des revendications précédentes, **caractérisé en ce que** l'unité d'évaluation (190) évalue une décroissance des vibrations mécaniques dans le col de boule d'attelage (10).
